# EUROPEAN PATENT APPLICATION

(11) **EP 1 256 900 A1**
(43) Date of publication of application: **13.11.2002**
(21) Application number: 01304157.9
(22) Date of filing: 09.05.2001
(51) Int. Cl.: G06K 9/20, G06F 17/30

(54) **Database entry system and method employing optical character recognition**

(71) Applicant: Requisite Technology Inc., Westminster, Colorado 80021 (US)
(72) Inventor: Townsend, Darren, Mississauga, Ontario L4W 3T6 (CA); Ramachandran, Dushyanth, Newmarket, Ontario L3Y 8C4 (CA); Bandi, David J. Requisite Technology, Inc.,, Westminster, CO 80021 (US)
(74) Representative: Wombwell, Francis

(57) **Abstract**

A system is disclosed for extracting data from non-standardized paper formats into electronic files, such as databases. The system is particularly suited for compiling data from engineering drawings and paper catalogs. A user interface presents an image (1114) of the paper document along with a list of attributes (1212) from a database. The user identifies regions of the image that contain relevant data, and highlights those regions on the computer screen (1316). The system incorporates optical character recognition (1410) to convert images of alphanumeric characters within each highlighted region into computer readable data. The user associates each highlighted region with an attribute (1318) so that data from the region gets stored as an attribute value. In one embodiment of the invention, the user interface is constructed to process columns of data directly into spreadsheets. One benefit of the invention is that parts lists can be quickly compiled and edited from engineering drawings. Another benefit is that information from paper catalogs can be quickly converted into computer data and subsequently stored into electronic databases.

## Description

### 1. Field of the Invention

The present invention relates to computer software for populating databases, and more particularly to a system and method employing optical character recognition along with an improved user interface to improve the efficiency of identifying, collecting, and storing relevant data into a database.

### 2. Description of the Prior Art

Optical character recognition (OCR) software is used to convert an image of text into computer readable text characters. Certain software packages employ OCR as an integrated component of a document or data handling engine. There is a reduced need for data entry operators when OCR can be employed to convert paper copies of data into electronic format.

One of the most efficient uses of OCR is to encode standard paper forms. Information on a standard form is located in predictable areas on the form. For example, the name of an applicant will always be located on the upper left comer of a particular type of form. Thus, computer software can be customized to extract the name of the applicant by employing OCR on the region in the upper left comer, an then storing the result directly in the appropriate field within a database.

Image subtraction schemes have been employed to extract data from standard forms. The image subtraction scheme typically works as follows. A bit map image of a blank standard form is created and stored in computer memory. When a filled-out standard form is scanned into memory, the image of the blank form is subtracted from the filled-out form, leaving only residual images wherein data has been entered onto the form by an applicant. The relative location of each residual image can be used to identify the content of the data, for example name, address, etc. OCR is employed on each residual image, and the resulting data is automatically entered into appropriate memory locations in a database.

A number of patent disclosures relate to image subtraction schemes. For example, U.S. Patent 5,694,494 discloses a method for retrieving user-supplied information from a scanned version of a completed form document. The method includes the steps of obtaining a first image of the document having information printed thereon in its blank form. A second image of the document is obtained after information has been added to it by the user. The two images are aligned, and for each pixel in the first image which corresponds to information in the document, those pixels are deleted from the second image to create an image which corresponds to subtraction of the first image from the second image.

U.S. Patent 5,428,694 discloses a data processing system and method for forms definition, recognition and verification of scanned images. When new master forms are fined in a system, a new processing template is also defined. The processing template is then referred to at the time of forms recognition processing.

When information can be located anywhere on the face of a document, image subtraction schemes are no longer applicable. There is no longer any predefined region wherein data is predictably located. For example, engineering drawings have relevant information located in various places, and each drawing is unique in the size and placement of information. Thus, what is required for efficient processing of engineering drawings is a system and method that will allow an operator to quickly identify relevant information on the face of the drawing, and then to apply OCR only to that defined region, and finally to direct the output of the OCR engine to a particular location in a database.

### Summary of the Invention

The present invention is a system and method for processing free-form paper information, and to transfer relevant information into an electronic database. The system and method allows an operator to quickly identify appropriate regions of information, apply OCR to those regions, and have the resulting text automatically entered into the proper storage location in an electronic database. The invention speeds up the process of populating databases, and increases the quantity and quality of the database content. The present invention is particularly suited for processing engineering drawings and paper-based catalogs, although the invention is useful for processing any free-form paper document.

One of the benefits of the current invention is an increased efficiency associated with identifying and processing targeted data. No effort is wasted in entering data which already exists within the database. Accordingly, the software is used to identify screen locations where elements of information are located; the software interrogates the database, identifies existing elements, and then populates only the missing elements. For example, if the database already has a name, but lacks a corresponding address, the software will only query the operator to identify the bit-mapped region containing the address.

An objective of the present invention is to provide a method and system for processing paper documents that do not have standard formatting.

A further objective of the present invention is to automate the processing of engineering drawings to extract relevant information and populate a database.

Yet a further objective of the present invention is to automate the process of creating electronic versions of catalogs from corresponding paper versions of the catalog.

### Brief Description of the Drawings

A more complete understanding of the present invention can be obtained by considering the following detailed description of the preferred embodiments thereof in conjunction with the accompanying drawings, in which:
Figure 1 is a logic block diagram representation of one embodiment of the present invention.

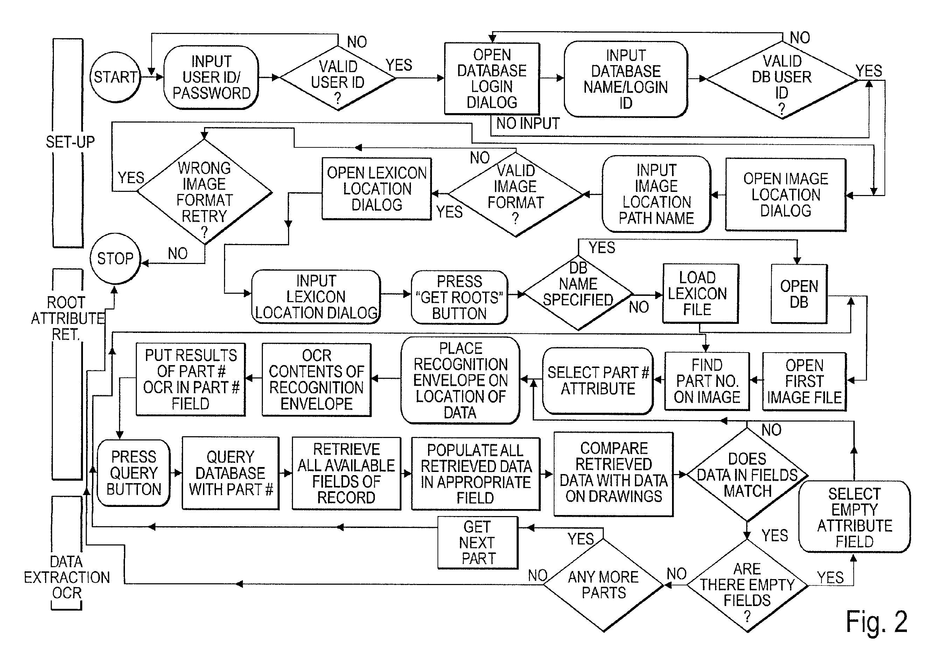

Figure 2 is an expanded logic block diagram representation of the embodiment shown in Figure 1.
Figure 3 is a view of a user interface according to one embodiment of the present invention, showing a setup dialog box with the user profile tab activated.
Figure 4 is a view of a user interface according to one embodiment of the present invention, showing a setup dialog box with the database setup tab activated.
Figure 5 is a view of a user interface according to one embodiment of the present invention. with a sample engineering drawing displayed.
Figure 6 is a view of a user interface according to one embodiment of the present invention, with a sample engineering drawing displayed along with attributes of the parts in the drawing.
Figure 7 is a modification of Figure 6, in which the attribute values have been recalled from a database and displayed to a user.
Figure 8 is a view of a user interface according to one embodiment of the present invention, with a portion of the drawing enveloped for OCR, with an arrow indicating that the enveloped text has been entered as an attribute value.
Figure 9 is a logic flow diagram of a second embodiment of the present invention, showing the initial setup of the user interface.
Figure 10 is a logic flow diagram of a second embodiment of the present invention, showing the digital image setup sequence.
Figure 11 is a logic flow diagram of a second embodiment of the present invention, showing the digital image retrieval sequence and the attribute retrieval sequence.
Figure 12 is a logic flow diagram of a second embodiment of the present invention, wherein the attributes are displayed to the user, and the user is queried for a part number.
Figure 13 is a logic flow diagram of a second embodiment of the present invention, wherein attribute values are displayed, and the user selects regions from the image for OCR processing.
Figure 14 is a logic flow diagram of a second embodiment of the present invention, showing
OCR processing, presentation of results, and subsequent storage in a database.

### Detailed Description of the Invention

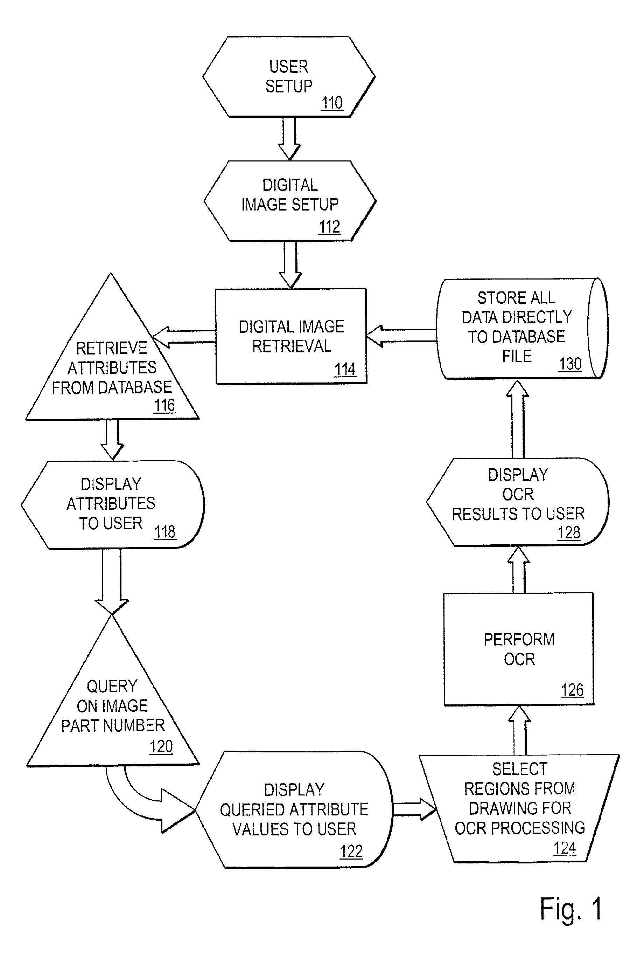

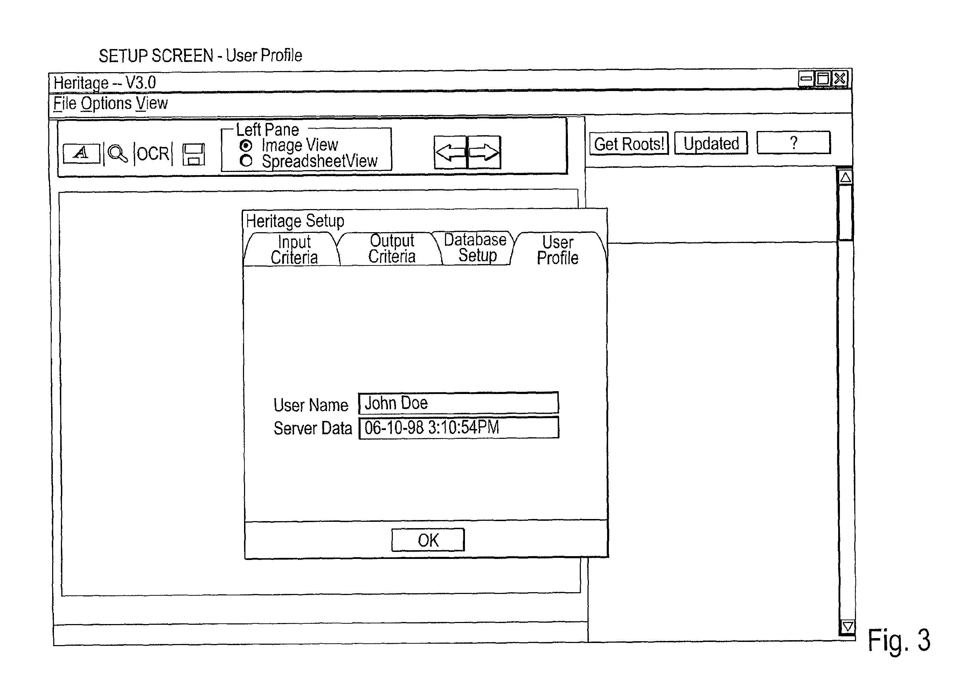

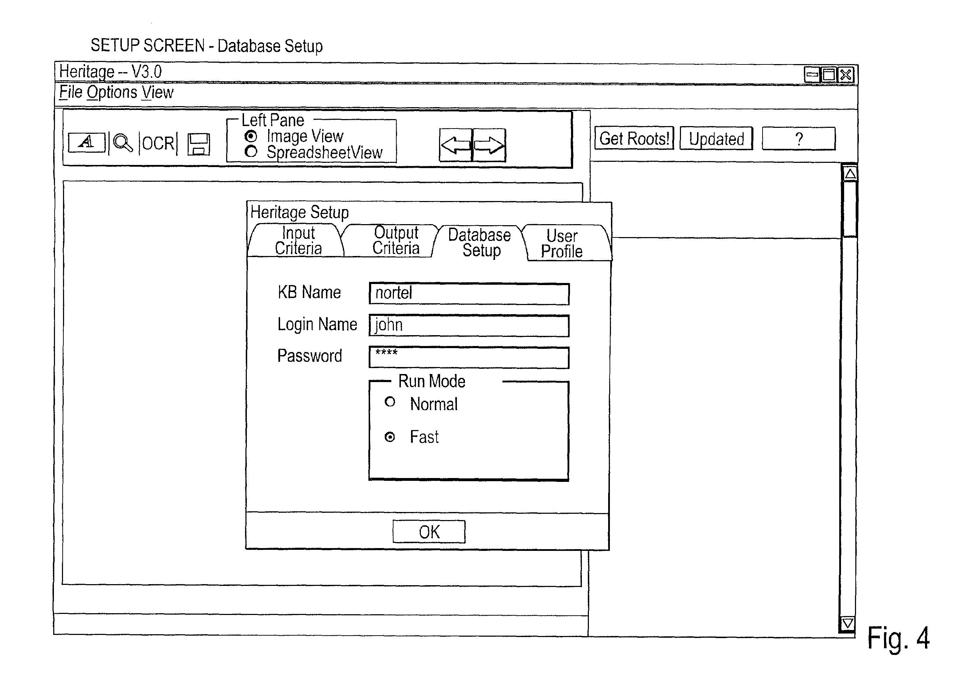

Figure 1 shows a block diagram of one embodiment of the present invention. The software is initiated, as shown in logical block 110, with a series of inquiries to the user. In one embodiment, the user must input his or her identification and password. Figure 3 shows a setup dialog box with the user profile tab activated. After verifying the password, the software can optionally display a dialog box from which the user selects a particular database. Figure 4 shows a setup dialog box with the database setup tab activated, and also shows an embodiment wherein the database is password protected.

The source code of the present invention was developed using Microsoft Visual Basic, although skilled programmers will appreciate that many different languages could be used to accomplish the same tasks. In addition, Eidesys SplitFrame Control software, available from EIDESYS of Los Angeles, CA, is used to control the resizing of the application window during run-time,

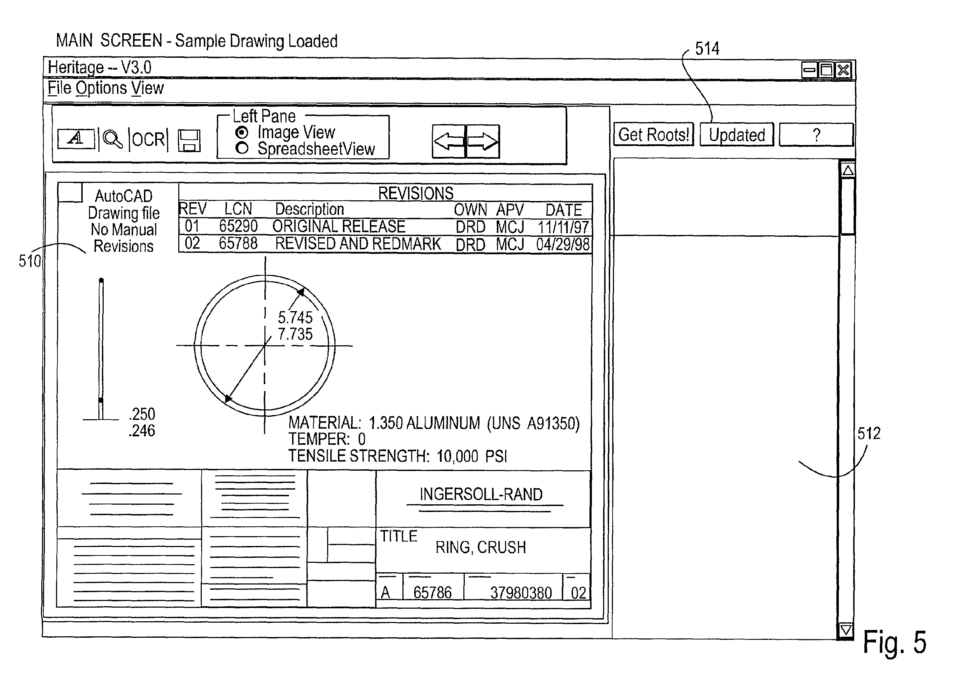

According to the present invention, printed material is converted into digital images using commonly available scanners. Any of a variety of digital image formats may be used, including standard bit-map formats. The digital images are preferably collected into a digital library from which individual images may be later retrieved for further processing. In logical block 112 of Figure 1, the software initiates the library of digital images. The initiation is preferably based on input from a dialog box in which the user specifies the image location path name. All of the images are preferably pre-stored in bit-mapped form, but may also be scanned into memory just prior to the digital image retrieval in logical block 114. The image file is subsequently checked for proper format. Figure 5 is a view of a user interface according to one embodiment of the present invention, with a sample engineering drawing 510 displayed.

One of the important aspects of the present invention is that it can be used effectively with engineering drawings. Information contained within an engineering drawing can be located in a variety of locations, associated with different views, and can even be in many different kinds of fonts or even hand printed on the drawing. Standard templates will not typically work as an aid to finding information on the drawing, with the exception of the information in the title block which may be a standard format. An operator must point out discreet locations on the drawing to identify data elements for inclusion in the database. Thus, human interaction is required to identify relevant information, and one of the functions of the present invention is to make the interaction as efficient as possible.

The software program is designed in a modular fashion to allow various database systems to be integrated into the overall invention. Database systems are available from a number of suppliers, including Aspect Development Inc. and Oracle Corporation. One embodiment of the present invention is integrated with the Cadis-PMX database software system. In standard relational databases the data may be organized into records comprised of fields. Each record may contain data related to a single part, with the data organized into fields. Each field may hold an attribute value. Other equivalent database structures are well known, including object-oriented databases in which records are functionally replaced with objects.

After a valid image has been selected, a lexicon location dialog box is opened. The user enters a database identifier, and the software retrieves attributes from the database that are associated with the selected image, as shown in block 116 of Figure 1. Figure 5 shows a sample drawing 510 loaded on the left side of the screen, with a blank area 512 on the right side. Figure 5 is illustrative of the embodiment wherein the software is formatted to operated with engineering drawings and their corresponding database of parts.

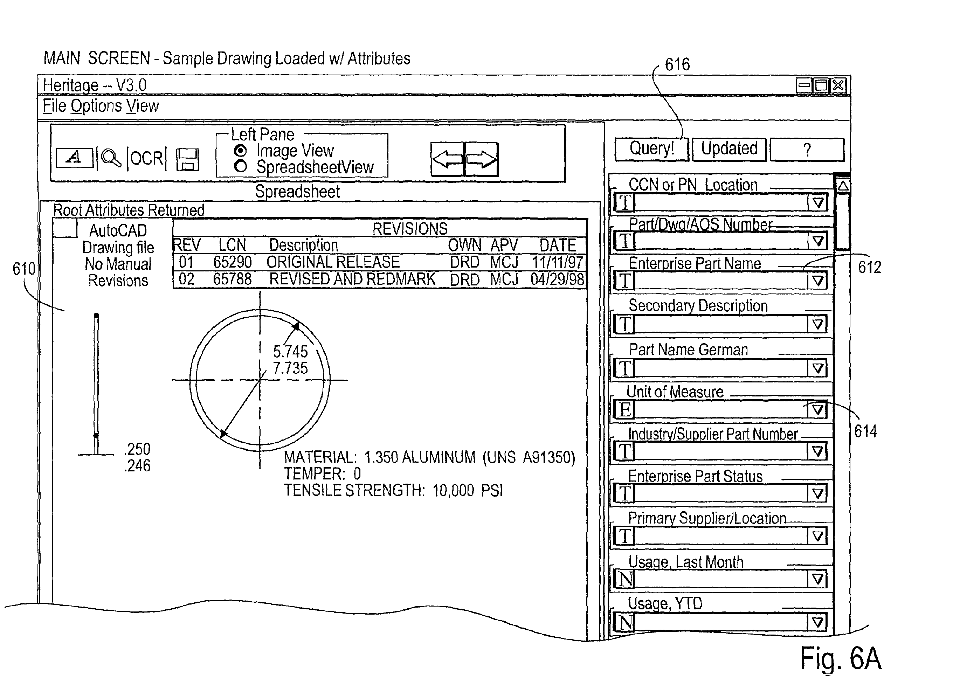

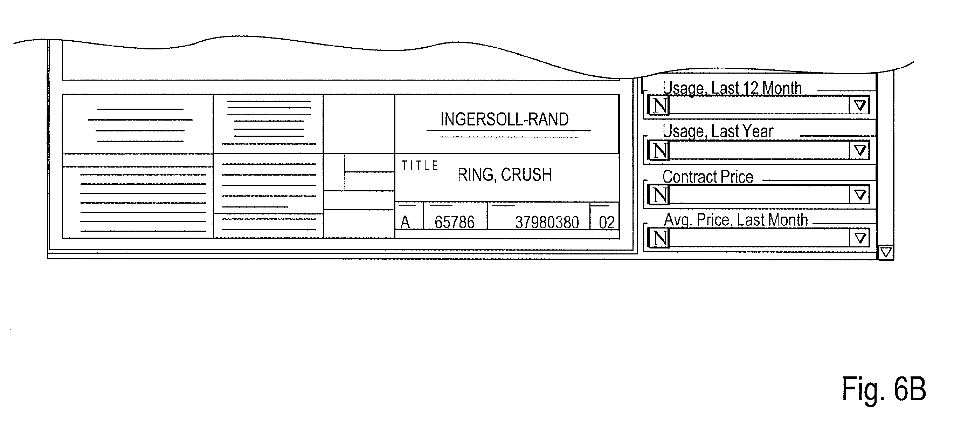

Figure 6 shows an update of Figure 5 once the appropriate database has been selected. The blank area 512 has been updated and is shown as 612 in Figure 6. This step in the method is also shown in block 118 of Figure 1. Area 612 lists the attributes that are associated with each part in the selected database. For example, attribute 614 is titled, "Unit of Measure" and contains options for English or Metric units of measure for each dimension of a part in a database.

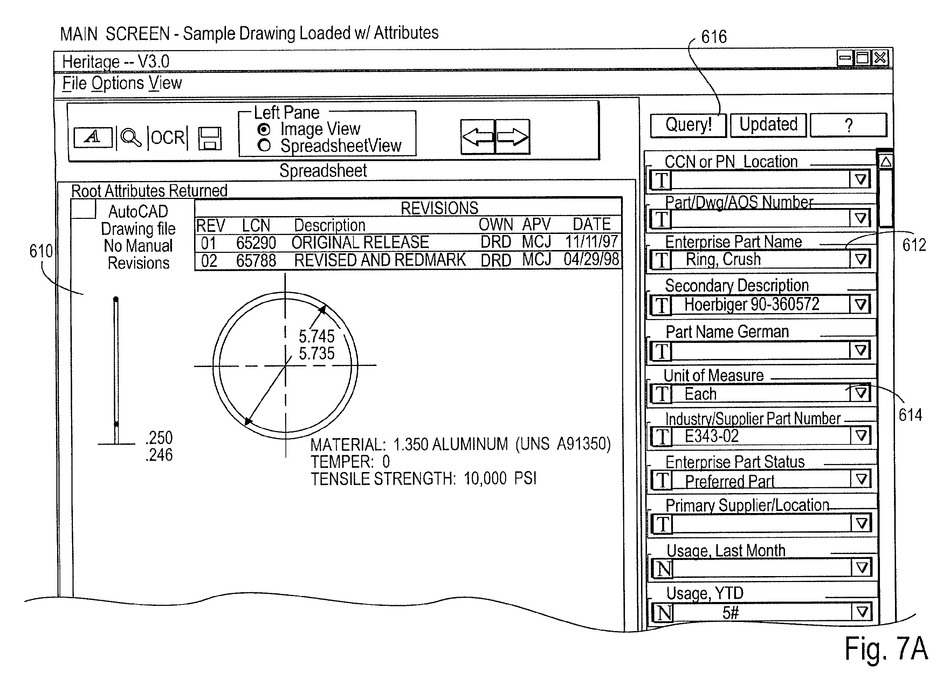

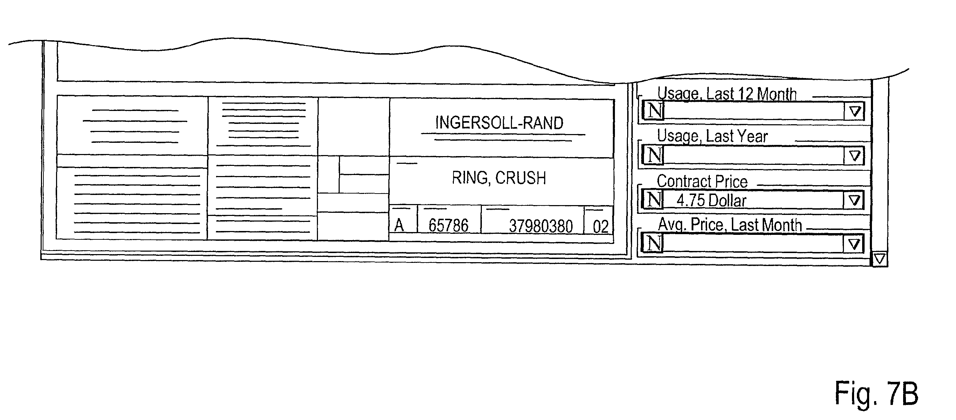

When the user selects a part number from the attribute list, the software queries the database and displays all of the available attributes. The logic incorporating the step of selecting a part number is shown schematically in block 120 in Figure 1. The subsequent step of displaying attributes associated with the queried part is shown in logical block 122. The database is interrogated to find values for each of the attributes, and those values are subsequently displayed to the user. It is understood that only attribute values which have been previously entered into the database will be displayed. In the event that no attributes have been entered, there will be no attribute values displayed to the user. A specific example is shown in Figure 7, wherein some of the attributes are filled in, and others are blank. One of the advantages of the present invention is that the operator can quickly identify the attributes that are blank, or that need an update. The operator can thereby save time by only updating the required data.

In an embodiment for engineering drawings, the operator opens an image file, and identifies a part number associated with that image. The operator can enter the part number into the attribute field directly, or can use the OCR engine to identify the part number once the part number has been marked with a recognition envelope.

In the preferred embodiment, the OCR engine is the ImageBASIC ActiveX 32-bit OCX software, available from Diamond Head Software Inc. of Richardson, Texas. Many different OCR engines are available, and would be interchangeable with the OCR engine of the present invention. Skilled programmers will appreciate that improvements to OCR engines are likely to occur, and that any substitution of a more advanced OCR engine is not a departure from the scope of the present invention.

The operator selects the attribute of interest, and then draws an envelope around the location of the data on the drawing, as described in block 124 of Figure 1. The envelope is preferably drawn by using a mouse to identify corners of a rectangular region on the drawing. The OCR engine is applied to the region, as shown by block 126, and any text within the region is converted from its bit-mapped format into a text format such as ASCII and displayed to the user, as shown in block 128. The text is then checked against any formatting or validity requirements, and then stored into the database, as shown in block 130 of Figure 1.

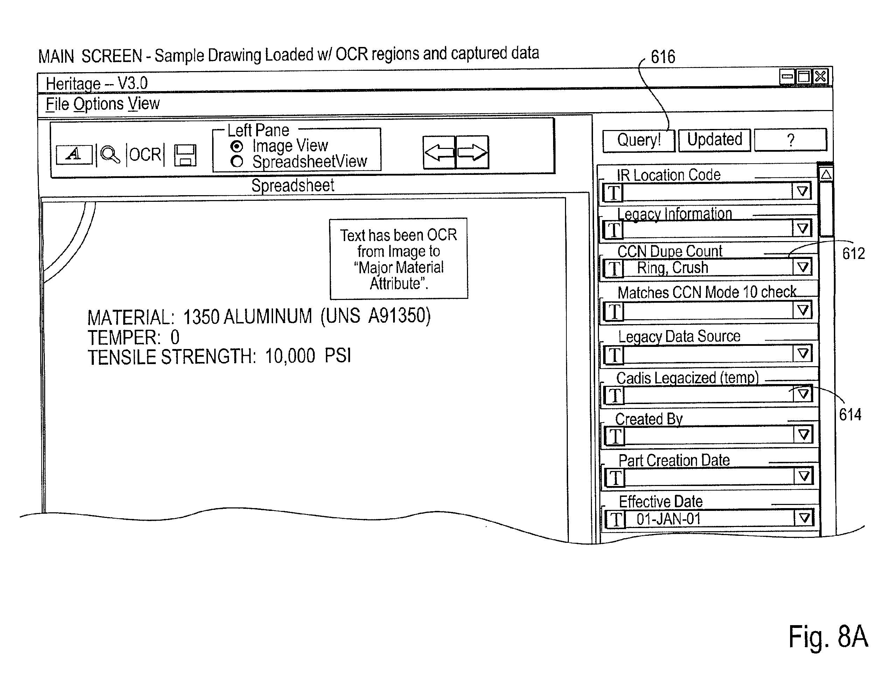

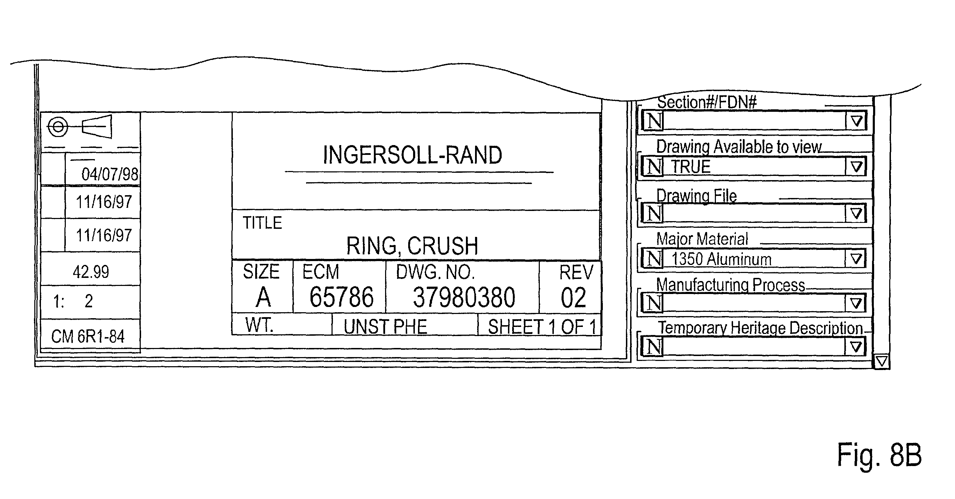

For example, Figure 8 shows an attribute 810 entitled, "Major Material." A highlighted region of the drawing 812 contains a notation related to the major material. The OCR engine has been invoked to operate on the highlighted region, and the output from the OCR engine appears in the attribute 810.

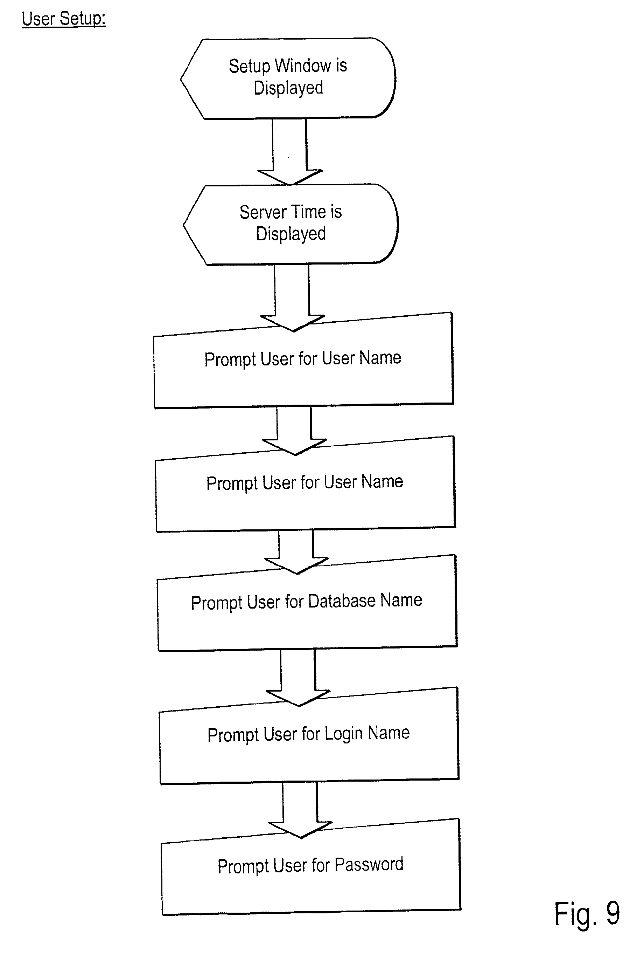

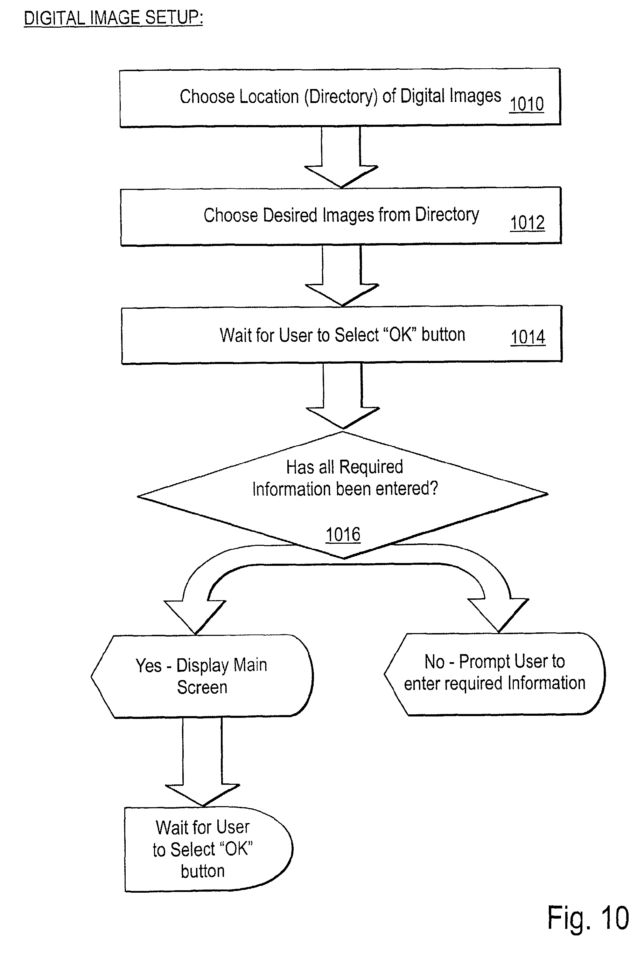

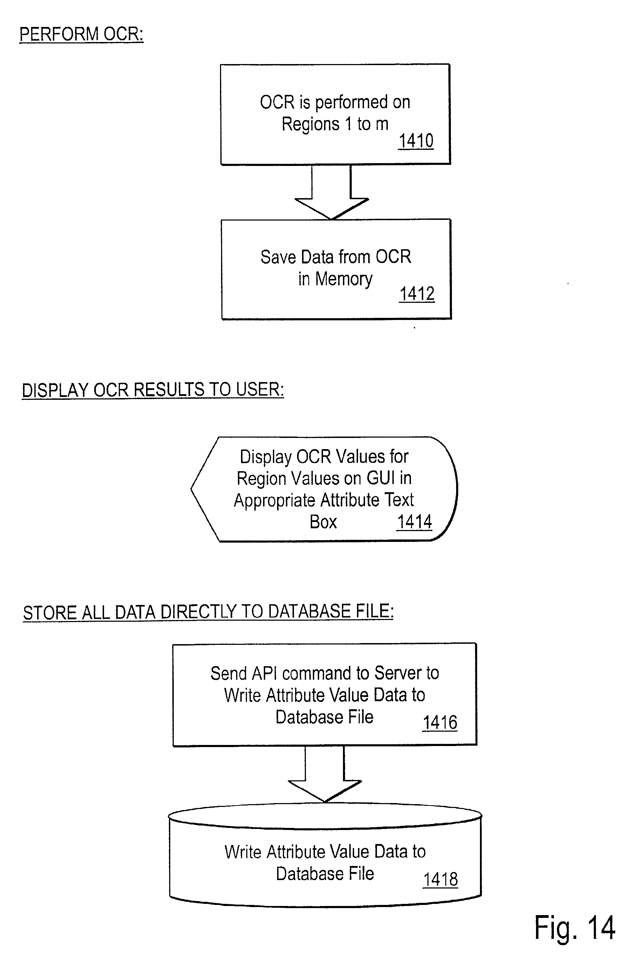

A logical block diagram of the software is shown schematically in Figures 9 through 14. Figure 9 shows the process of initializing the software with the user, including the administrative tasks of entering a login name and password. In the schematic of Figure 10, the user chooses the directory containing the digital images in block 1010, and then selects the desired images from the directory in block 1012. The user validates the selections by pressing the OK button, as shown in block 1014. Thereafter, the software verifies that all required information has been entered by the user (block 1016).

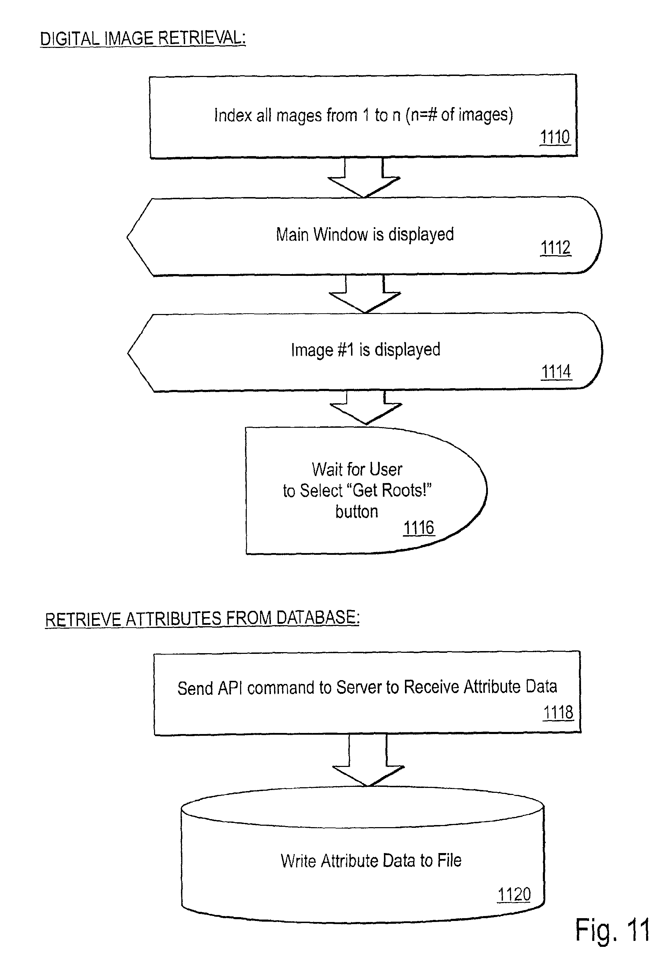

In Figure 11, the selected images are first indexed (block 1110) and then the main window is displayed (block 1112) with the first image incorporated in the display (block 1114). An example of a user interface at this stage is shown in Figure 5. When the user selects the "get roots!" button (514 in Figure 5) the software executes a series of steps to retrieve the attributes from the database. In the preferred embodiment, the series of steps includes executing three command-line driven applications that were developed in the C programming language. These applications incorporate the Cadis application programming interface (API) and have the ability to export and import data to the Cadis-PMX database. The applications are named app_pathexp.exe, app_attrexport, and app_partallattr.exe.

app_pathexp.exe functions as follows. Given a part number on the command line, app_pathexp will print the part number's path handle and path name to a temporary file called "instpath.tmp."

app_attrexport.exe functions as follows. Given a path handle or path name on the command line, app_attrexport.exe will print the attribute names located at that path to a temporary file called "instpath.tmp." The user must specify "-p" if using the path name and "-h" if using the path handle. If the word "root" is specified on the command line then all attributes (global and local) will be exported, otherwise only local attributes will be exported. The name of the export file is "attrexport.tmp."

app_partallattr.exe functions as follows. Given a part number on the command line, app_partallattr will print all of the attribute values for that particular part to a file called "instinfo.tmp." The user must specify "-I" if to export all local attribute values and "-g" to export all attribute values (global and local). Wildcarding is allowed so that more than one part number can be searched. If the search finds "n" part numbers, then the export file will contain "n" lines of data.

The three applications described above are called by a main program to transfer data into and out of the database and to the user interface. The applications The following flow chart describes one method of using the three applications to integrate a database into the main software code:

### RETRIEVE ATTRIBUTES FROM DATABASE:

Send API command to Server to Receive Root Attribute Data (process)
app_attrexport.exe is called to retrieve root attributes

Write Attribute Data to File (Direct Access Storage)

### DISPLAY ATTRIBUTES TO USER:

Open Attribute Data File (Stored Data)

Display Attribute Data on GUI (display)

The above flow chart is shown schematically by the logical blocks 1118 and 1120 in Figure 11. It will be obvious to skilled artisans that a number of equivalent approaches may be undertaken to produce an interface with a database program. For example, the functions carried out by the three applications may be divided differently among a different number of applications.

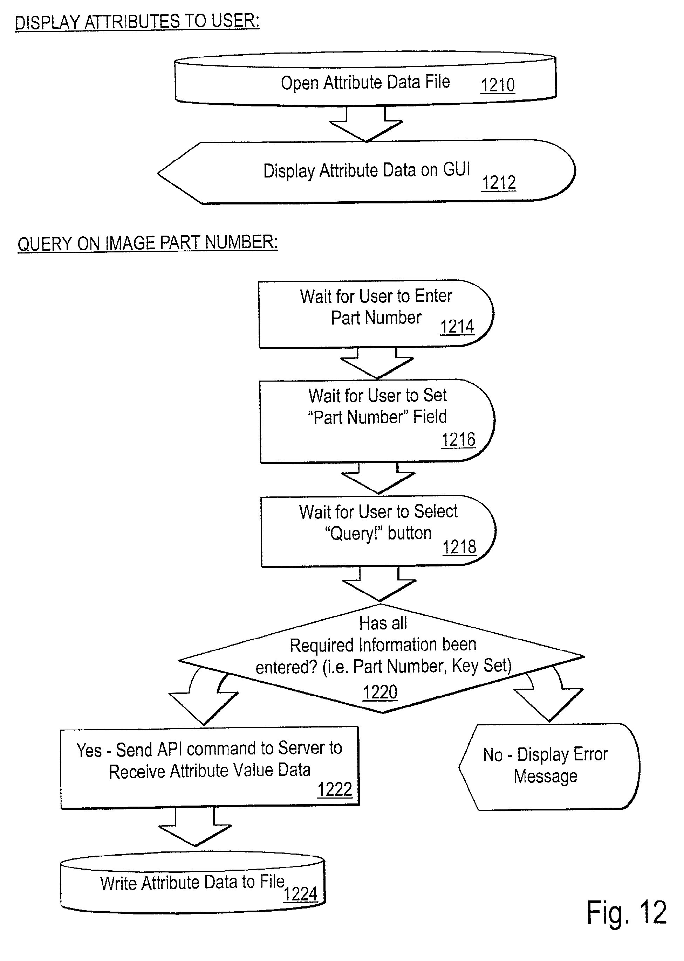

Once the attribute data has been written to a file (block 1120), the file can be opened and displayed to the user as shown in blocks 1210 and 1212 in Figure 12. An example of the GUI at this stage is also shown in Figure 6.

Next, the user enters a part number (blocks 1214 and 1216), and then selects the "query" button shown as 616 in Figure 6, and logically as block 1218 in Figure 12. The following steps are executed (and shown schematically in blocks 1222 and 1224 in Figure 12):

### OUERY ON IMAGE PART NUMBER:

Wait for User to Enter Part Number (delay)
Wait for User to Set "Part Number" Field As Key Field (delay)
Wait for User to Select "Query!" button (delay)
Has all Required Information been entered? (i.e. Part Number and Key Set) (decision)
No - Display Error Message (display)
Yes - Send API command to Server to Receive Path
app_pathexport.exe is called to retrieve path
Write Path to File (Direct Access Storage)
Display Path on GUI in Status Bar
Send API command to Server to Receive Local Attribute Data (process)
app_attrexport.exe is called to return local attributes
Write Attribute Data to File (Direct Access Storage)
Create Attribute Text Boxes for all attributes in File and Display Attributes on GUI (display) Send API command to Server to Receive Attribute Value Data (process)
app_partallattr.exe is called to return all attribute values
Write Attribute Data to File (Direct Access Storage)

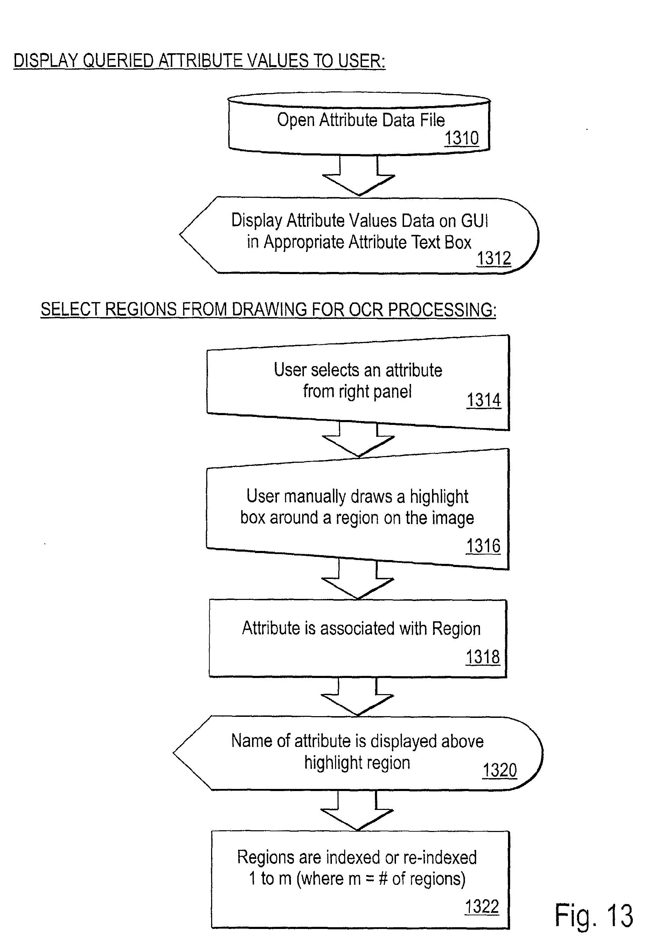

The result of this algorithm is that the value of each attribute is displayed to the user on the GUI, an example of which is shown in Figure 8. The logical steps of displaying attribute values are shown as blocks 1310 and 1312 in Figure 13.

At this stage, the GUI is configured to accept new input from the user in a manner that provides the time-saving benefit of this invention. First, the user selects an attribute from the list of attributes on the GUI, as shown in block 1314. Using a mouse to guide the cursor, the user draws a highlight box around a region of the drawing that contains alphanumeric information associated with the selected attribute (block 1316). The software associates the highlighted region with the attribute (1318), and optionally displays the name of the attribute above the region to give the user verification of the proper selection (1320). The user may further select other attributes and associate other highlight regions to those further selections. The regions are indexed or re-indexed by the software (1322).

When the OCR button (814 in Figure 8) is selected by the user, the OCR engine is invoked by the software to convert the image characters in each highlight box into text. The text is subsequently saved into memory (1412), and then displayed to the user in the associated attribute box (1414). The attribute data is also stored directly to the database file (1416 and 1418).

In an alternative embodiment of the invention, instead of sending data to attribute fields, the software sends columns of data into a spreadsheet program. The advantage of this embodiment is that columns of similar data can be processed simultaneously. Instead of applying this software to engineering drawings, this embodiment is useful for applying to paper-based catalogs and parts listings. These types of publications often have columns of part numbers matched with columns of descriptive material and prices. The software conveniently applies OCR to entire columns of data-imagery and then fits the derived text into a spreadsheet. Many of the functions are similar to the engineering-drawing implementation, except that the GUI's are optimized to allow editing of entire columns.

One of the advantages of this "catalog" version of the software is that the operator can characterize the data format in each column, for example as currency. Thus, the operator can provide an indication to the OCR engine that the column shows currency, thus increasing the accuracy of the OCR. For example, the accuracy would be increase by avoiding the mischaracterization of $ as an S. Therefore, an optional step in the method may include a user selection of format for each column of data in the highlight region.

The following is example pseudo-code that can be used as a guide to implement the "catalog" version of this invention.

### 'CATALOG SAMPLE SOURCE CODE

'The following code OCRs all regions selected on the display and outputs the text to the spreadsheet

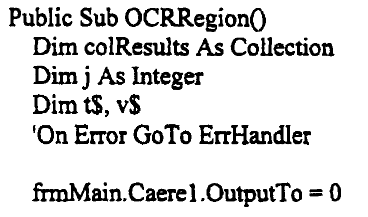

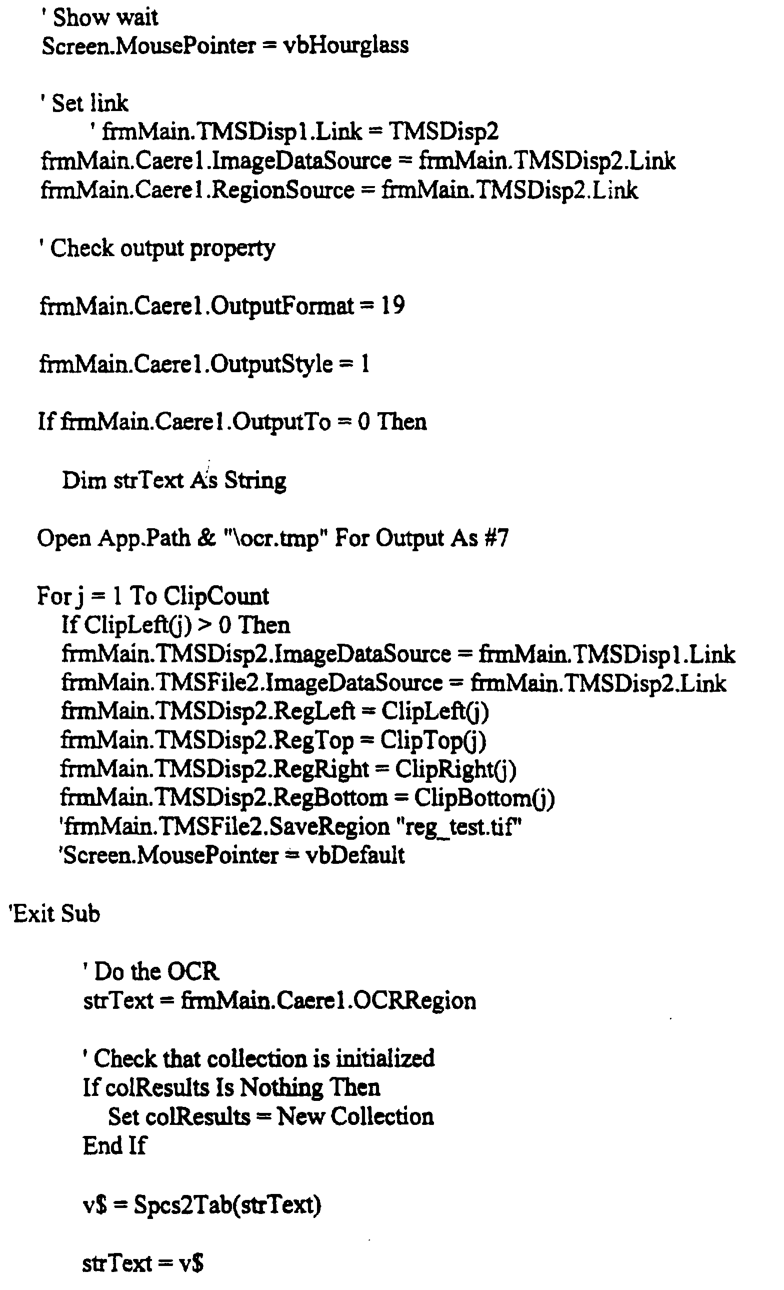

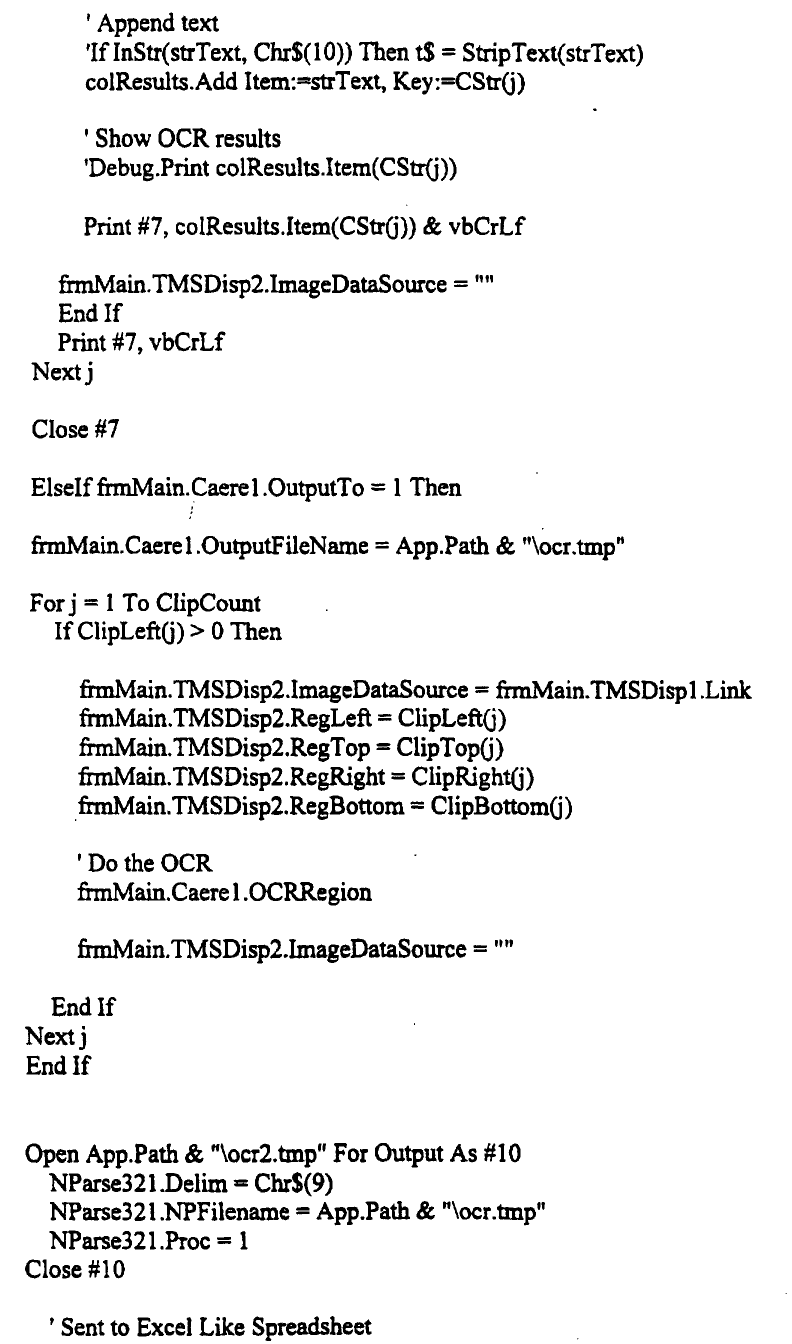

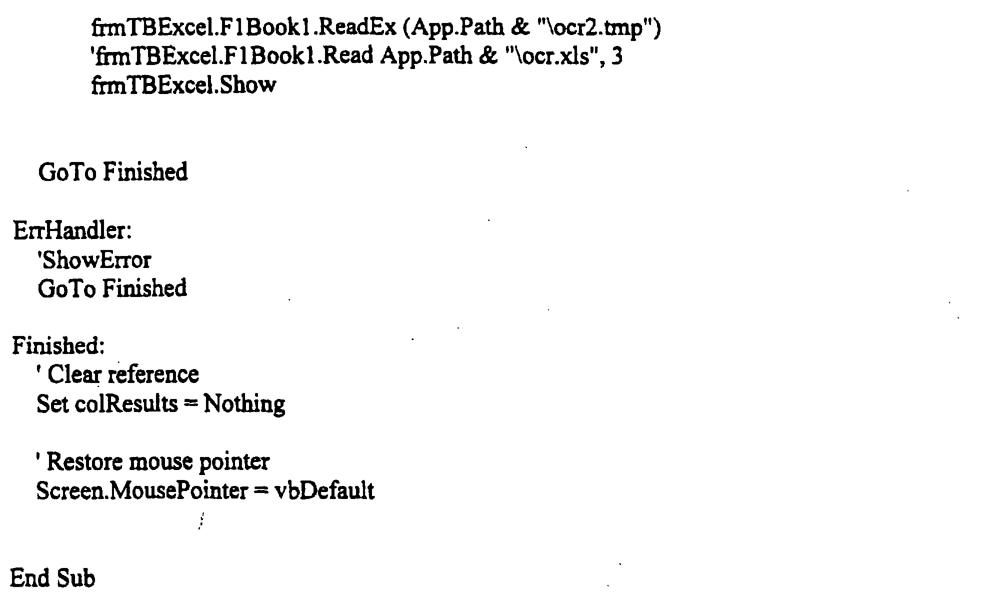

It will be apparent to those of skill in the appertaining arts that various modifications can be made within the scope of the above invention. Accordingly, this invention is not to be considered limited to the specific examples or embodiments chosen for the purposes of disclosure, but rather to cover all changes and modifications which do not constitute departures from the permissible scope of the present invention. Having thus described our invention, what is desired to be secured and covered by Letter Patent is presented in the appended claims.

## Claims

1. A method to convert textual material regarding a plurality of parts into computer files, the method comprising:
displaying (1114) a digital image containing textual material regarding a part on a user interface along with a plurality of attributes (1312) relating to the part;
selecting a region of the image (1316) containing textual material related to one of the attributes;
associating the textual material of the region with the attribute (1314);
applying optical character recognition to the region (1410) to convert textual material of the region into text; and
saving the text (1416, 1418) into a field corresponding to the attribute.

2. The method according to claim 1, further comprising:
displaying at least one allowable input for one of the plurality of attributes (1312);
selecting the at least one allowable input (1314); and
saving the at least one allowable input into the database (1416).

3. The method according to any one or more of the above claims, further comprising, after selecting a region displaying one of the attributes on the user interface adjacent to the region (1312).

4. The method of any one or more of the above claims, further comprising interrogating a database for prestored values of the plurality of attributes (1310) and displaying the prestored values along with the attributes (1312).

5. The method of any one or more of the above claims, wherein the database comprises a plurality of records each corresponding to a part, a plurality of fields for each record, each corresponding to an attribute and a plurality of values corresponding to at least some of the fields.

6. The method of any one or more of the above claims, further comprising selecting a data format for the predefined attribute and applying the data format during applying optical character recognition to the region.

7. An apparatus to convert textual material into computer database files, the apparatus comprising:
a digital library containing a plurality of digital images each image containing textual material regarding at least one of a plurality of parts;
a database having a plurality of fields corresponding to predefined attributes relating to the parts;
a user interface to display a digital image regarding a part along with the predefined attributes regarding the part;
a recognition envelope to mark a region of the image containing textual material related to at least one of the predefined attributes;
an optical character recognition engine to convert portions of the region into text; and
software to save the text into at least one of the fields within the database, the fields corresponding to the predefined attributes to which the textual material is related.

8. A graphical user interface (GUT) method comprising:
a digital image containing textual material regarding a part;
a recognition envelope to mark a region of the image containing textual material related to a predefined attribute of the part;
a plurality of predefined attributes relating to the part and corresponding to fields in a database, the attributes being selectable to associate the selected attribute with the marked region;
an OCR command to apply optical character recognition to the marked region to convert the textual material of the marked region into text; and
a save command to save the text into at least one of the fields within the database, the at least one of the fields corresponding to the selected attribute.

9. The GUI according to claim 8, further comprising a get roots button to retrieve attributes regarding a part from a database of attributes for the part.

10. The GUI according to any one or more of claims 8 and 9, further comprising a query button to interrogate a database for prestored values of each of the plurality of attributes and to display the prestored values.
